# EUROPÄISCHE PATENTANMELDUNG

(11) **EP 3 511 226 A1**
(43) Veröffentlichungstag der Anmeldung: **17.07.2019**
(21) Anmeldenummer: 18209703.0
(22) Anmeldetag: 03.12.2018
(51) Int. Cl.: B62D 5/00, B62D 9/00

(54) **ELEKTRISCHES ANTRIEBSSYSTEM UND VERFAHREN ZUM BETREIBEN EINES ELEKTRISCHEN ANTRIEBSSYSTEMS**

(30) Priorität: 10.01.2018 DE 102018200257
(71) Anmelder: Robert Bosch GmbH, 70442 Stuttgart (DE)
(72) Erfinder: Fassnacht, Jochen, 75365 Calw (DE); Mueller, Norbert, 71642 Ludwigsburg (DE); Beulich, Klaus, 71263 Weil Der Stadt (DE)

(57) **Zusammenfassung**

Die vorliegende Erfindung schafft ein elektrisches Antriebssystem (1), umfassend eine erste elektrische Maschine (EM1), welche mit einem ersten Antriebsrad (A1) verbunden ist, eine zweite elektrische Maschine (EM2), welche mit einem zweiten Antriebsrad (A2) verbunden ist, eine elektrische Lenkvorrichtung (L), welche mit dem ersten Antriebsrad (A1) und mit dem zweiten Antriebsrad (A2) verbunden ist, und eine Steuerungseinrichtung (SE), welche mit der ersten elektrischen Maschine (EM1) und mit der zweiten elektrischen Maschine (EM2) verbunden ist, und welche dazu eingerichtet ist, in Abhängigkeit von einer Eingabe durch eine Eingabevorrichtung, die erste elektrische Maschine (EM1) mit einem ersten Energiefluss (E1) und/oder die zweite elektrische Maschine (EM2) mit einem zweiten Energiefluss (E2) anzusteuern.

## Beschreibung

Die vorliegende Erfindung betrifft ein elektrisches Antriebssystem und ein Verfahren zum Betreiben eines elektrischen Antriebssystems.

### Stand der Technik

Antriebskonzepte für Fahrzeuge, insbesondere für autonom fahrende Fahrzeuge, sind, betreffend ihrer Sicherheitsmerkmale, der Frage nach Lösungen für auftretende Fehlfunktionen im Antriebs-, Brems- und Lenksystem unterworfen. So ist für einen sicheren Betrieb eines Fahrzeugs bei einer auftretenden Fehlfunktion und einem etwaigen Ausfall des Antriebs, der Lenkung oder der Bremsanlage eine Gewährleistung von Ersatzfunktionen von entscheidender Bedeutung für die Sicherheit, um zumindest für ein Not- oder Hilfsmanöver ausreichend Antrieb-, Lenk- und/oder Bremsmöglichkeit zur Verfügung zu haben. Bei redundanten Systemen ist im Falle von Fehlfunktionen eine rechtzeitige Reaktion zum Eingreifen durch das Hilfssystem (Lenkung, Bremsen, Antrieb) notwendig, um ein Abkommen eines Fahrzeugs von der Straße, eine Kollision, oder ein Liegenbleiben möglichst zu verhindern.

Aus der DE 10 2015 005 020 A1 ist eine Lenkvorrichtung sowie ein Verfahren bekannt, durch welche ein Fahrzeug auch bei einem Fehler in der Lenkvorrichtung noch steuerbar bleibt.

### Offenbarung der Erfindung

Die vorliegende Erfindung schafft ein elektrisches Antriebssystem nach Anspruch 1, und ein Verfahren zum Betreiben eines elektrischen Antriebssystems nach Anspruch 9.

Bevorzugte Weiterbildungen sind Gegenstand der Unteransprüche.

### Vorteile der Erfindung

Die der vorliegenden Erfindung zugrunde liegende Idee besteht darin, ein elektrisches Antriebssystem anzugeben, welches eine Redundanz für den elektrischen Traktionsantrieb aufweist, wobei auch ein Ausfall eines Lenksystems kompensiert werden kann. Zwei separate elektrische Traktionsantriebe, welche zwei unterschiedliche Antriebsräder antreiben, ermöglichen eine Redundanz im Traktionsantrieb und ermöglichen auch ein Lenken eines Fahrzeugs über die Antriebsräder, wobei durch das Verursachen unterschiedlich schneller Rotationsbewegungen bzw. unterschiedlicher Antriebsmomente der Antriebsräder eine Lenkwirkung auf das Fahrzeug erzielt werden kann. Hierbei kann ein eigentliches Lenksystem unterstützt oder dieses bei einem Ausfall für Not- oder Hilfsmanöver kompensiert werden und so ein Not- oder Hilfsbetrieb für Traktionsantrieb und Lenkung, besonders bei autonom fahrenden Fahrzeugen, erzielt werden, wodurch sich das Konzept einer sicheren Lenkung und eines sicheren Antriebs (gegenüber Erst- oder Einzelfehlern im System) ergibt.

Erfindungsgemäß umfasst das elektrische Antriebssystem eine erste elektrische Maschine, welche mit einem ersten Antriebsrad verbunden ist, eine zweite elektrische Maschine, welche mit einem zweiten Antriebsrad verbunden ist, eine elektrische Lenkvorrichtung, welche mit dem ersten Antriebsrad und mit dem zweiten Antriebsrad verbunden ist, und eine Steuerungseinrichtung, welche mit der ersten elektrischen Maschine und mit der zweiten elektrischen Maschine verbunden ist, und welche dazu eingerichtet ist, in Abhängigkeit von einer Eingabe durch eine Eingabevorrichtung, die erste elektrische Maschine mit einem ersten Energiefluss und/oder die zweite elektrische Maschine mit einem zweiten Energiefluss anzusteuern.

Das elektrische Antriebssystem eignet sich vorteilhaft für eine gelenkte Achse eines Fahrzeugs.

Die erste und die zweite elektrische Maschine stellen vorteilhaft zwei voneinander getrennte Traktionsantriebe für ein Fahrzeug, vorteilhaft für ein autonom fahrendes Fahrzeug, dar. Die Eingabevorrichtung umfasst vorteilhaft einen Sensor, welcher erkennt, mit welchen Bewegungsparametern (Geschwindigkeit, Richtung) sich das Fahrzeug fortbewegt und/oder fortbewegen soll (Abgleich mit einem Istwert). Alternativ dazu kann das Fahrzeug jedoch auch durch einen Fahrer (Benutzer) gesteuert werden, welcher eine Eingabe durch die Eingabevorrichtung eingibt. Durch zwei vorteilhaft gleichzeitig funktionierende Traktionsantriebe ist es möglich, die Einzelradantriebe unabhängig voneinander anzusteuern, so dass Traktionsmomentverteilungen beliebig gesteuert werden können, und beispielsweise als Differentialsperren wirken können. Folglich kann daher vorteilhaft auf die Anwendung von Differentialen verzichtet werden und trotzdem eine Redundanz im Traktionsantrieb eines Fahrzeugs erzielt werden. Mit anderen Worten kann bei teilweisen oder vollständigen Ausfall eines der Traktionsantriebe durch Fehlfunktionen im System des einzelnen Traktionsantriebs, etwa durch eine Fehlfunktion einer der Energiespeichereinrichtungen, der andere Traktionsantrieb die Fortbewegung des Fahrzeugs weiterhin gewährleisten. Auf diese Weise können Fehler in einzelnen Komponenten eines Traktionsantriebs ausgeglichen werden und vorteilhaft nicht zum Ausfall des gesamten Traktionsantriebs führen.

Die erste elektrische Maschine und die zweite elektrische Maschine können vorteilhaft gleich stark ausgelegt sein, jedoch auch die Anwendung unterschiedlich starker elektrischer Maschinen ist möglich. Bei unterschiedlich starker erster und zweiter elektrischer Maschine dient die schwächere Maschine vorteilhaft als ein Hilfsantrieb, mittels welchem etwa ein nächster Parkplatz, eine Werkstatt oder sogar ein Heimparkplatz erreicht werden kann. Des Weiteren kann eine schwächere Maschine auch nur für das Aufbringen eines Drehmoments für die Lenkwirkung am Rad (oder Torque-Vektoring) ausgelegt sein.

Gemäß einer bevorzugten Ausführung des elektrischen Antriebssystems umfasst die elektrische Lenkvorrichtung ein mechanisches Lenksystem und eine dritte elektrische Maschine, wobei das mechanische Lenksystem mit dem ersten Antriebsrad und mit dem zweiten Antriebsrad verbunden ist, und die dritte elektrische Maschine dazu eingerichtet ist, das mechanische Lenksystem zu betreiben.

Die dritte elektrische Maschine umfasst vorteilhaft einen Elektromotor, welcher in seiner Leistung dazu ausgelegt ist, das mechanische Lenksystem zu bewegen. Das mechanische Lenksystem umfasst vorteilhaft gängige mechanische Lenkkomponenten wie Dom- und Lenklager, Lenk- und Spurstangen, Lenkkraftverstärker, Federbeine, und weitere Komponenten. Für ein sich drehendes Antriebsrad wird von diesem eine Kraft erzeugt, welche auf das mechanische Lenksystem wirkt, wobei ohne eine ausgleichende Gegenkraft durch das Lenksystem dieses eine Lenkbewegung vollziehen würde. Das mechanische Lenksystem mit der dritten elektrischen Maschine erzeugt vorteilhaft in einer bestimmten Lenkposition, bei sich drehenden Antriebsrädern, eine stabilisierende Gegenkraft (auch beim Auffahren auf Hindernisse mit nur einem Antriebsrad), so dass die Lenkposition bis zu einer gewünschten Änderung der Lenkbewegung konstant gehalten wird. Bei Ausfall eines der beiden Traktionsantriebe wird vorteilhaft ein Fahrzeug mit der elektrischen Lenkvorrichtung gelenkt und mit nur der ersten oder nur der zweiten elektrischen Maschine angetrieben.

Durch das Konzept der Hifslenkung kann vorteilhaft ein rechtzeitiger Lenkeingriff bei einer Fehlfunktion der eigentlichen Lenkung erfolgen, etwa bei schneller Fahrt (beispielsweise 80 - 100 km/h) auf kurviger Landstrasse, wenn ein Fahrer bei klassischer Lenkung (einfache elektrische oder elektrohydraulische Lenkung ohne Redundanz) nur zu spät oder überhaupt nicht eingreifen könnte. Eine solche Hilfslenkung kann vorteilhaft bei einem Erstfehler im System (eigentliche Lenkung) das Fahrzeug weiterhin lenken (fail-operational). Das elektrische Antriebssystem gewährleistet gleichzeitig, dass bei einem Erstfehler in einer der Systemkomponenten auch der Antrieb zumindest eingeschränkt weiter funktioniert (fail-opeartional). Das beschriebene Konzept ermöglicht es vorteilhaft auf eine mehrfache Ausführung aller Komponenten für den Antrieb und die Lenkung zu verzichten wodurch sich Kosteneinsparungen ergeben.

Gemäß einer bevorzugten Ausführung umfasst das elektrische Antriebssystem eine erste Energiespeichereinrichtung und eine zweite Energiespeichereinrichtung, wobei die erste Energiespeichereinrichtung den ersten Energiefluss und die zweite Energiespeichereinrichtung den zweiten Energiefluss bereitstellt.

Um eine Redundanz der beiden Traktionsantriebe durch die erste und die zweite elektrische Maschine bereitzustellen ist es vorteilhaft notwendig für jede elektrische Maschine eine eigene Energieversorgung (Redundanz in der Energieversorgung) zu gewährleisten. Bei der ersten sowie bei der zweiten Energiespeichereinrichtung handelt es sich vorteilhaft um Hochvolt-Batterien (> 60 V) falls diese für einen Hauptantrieb ausgelegt sind oder um 48 oder 12 V-Batterien, falls diese für einen Hilfsantrieb ausgelegt sind. Die jeweilige elektrische Maschine wird vorteilhaft über einen Inverter mit einem Energiefluss von der entsprechenden Energiespeichereinrichtung (erste oder zweite) versorgt, wobei die Steuerungseinrichtung den Inverter mit einem Modulationssignal ansteuert.

Gemäß einer bevorzugten Ausführung umfasst das elektrische Antriebssystem ein erstes Bordnetz und ein zweites Bordnetz, wobei das erste Bordnetz mit der ersten elektrischen Maschine und das zweite Bordnetz mit der zweiten elektrischen Maschine verbunden ist, und die Steuerungseinrichtung mit dem ersten Bordnetz und mit dem zweiten Bordnetz verbunden ist.

Gemäß einer bevorzugten Ausführung umfasst das elektrische Antriebssystem ein drittes Bordnetz, welches mit der elektrischen Lenkvorrichtung verbunden ist, und die Steuerungseinrichtung mit dem dritten Bordnetz verbunden ist.

Das erste und das zweite Bordnetz sind vorteilhaft elektronisch getrennt voneinander. Lediglich zur Steuerung des Gesamtantriebs (Zusammenwirkung der beiden Traktionsantriebe) ist jedes der Bordnetze mit der Steuerungseinrichtung verbunden. Das erste Bordnetz überwacht, regelt und/oder versorgt (betreibt) den ersten Traktionsantrieb mit der ersten elektrischen Maschine unabhängig von einer etwaigen Fehlfunktion im zweiten Traktionsantrieb oder in der elektrischen Lenkvorrichtung und das zweite Bordnetz überwacht, regelt und/oder versorgt (betreibt) den zweiten Traktionsantrieb mit der zweiten elektrischen Maschine unabhängig von einer etwaigen Fehlfunktion im ersten Traktionsantrieb oder in der elektrischen Lenkvorrichtung.

Das dritte Bordnetz überwacht, regelt und/oder versorgt die elektrische Lenkvorrichtung. Des Weiteren umfasst die elektrische Lenkvorrichtung vorteilhaft eine eigene Energieversorgung für die dritte elektrische Maschine, so dass die Funktionsweise der elektrischen Lenkung unabhängig von einer Fehlfunktion im ersten oder zweiten Traktionsantrieb ist.

Die Bordnetze werden vorteilhaft alle mit einer Spannung von 12 V betrieben, wobei das erste Bordnetz mit der ersten Energiespeichereinheit, vorteilhaft über einen Gleichrichter, oder mit einer eigenen 12 V Stützbatterie verbunden ist. Ebenso kann das zweite Bordnetz mit der zweiten Energiespeichereinheit, vorteilhaft über einen Gleichrichter, oder mit einer eigenen 12 V Stützbatterie verbunden sein. Das dritte Bordnetz ist vorteilhaft mit einer eigenen 12 V Stützbatterie verbunden, wodurch alle drei Bordnetze vorteilhaft mit einer von den anderen Bordnetzen unabhängigen Energieversorgung ausgestattet sind (Redundanz in Energie für die Bordnetze).

Gemäß einer bevorzugten Ausführung des elektrischen Antriebssystems umfasst das mechanische Lenksystem einen ersten Lenkwinkelsensor und einen zweiten Lenkwinkelsensor, wobei der erste Lenkwinkelsensor dazu eingerichtet ist, einen ersten Lenkwinkel des ersten Antriebsrads zu bestimmen, und der zweite Lenkwinkelsensor dazu eingerichtet ist, einen zweiten Lenkwinkel des zweiten Antriebsrads zu bestimmen.

Der erste und der zweite Lenkwinkelsensor können vorteilhaft optisch oder in jeglicher gängigen Art und Weise ausgebildet sein, und sind vorteilhaft jeweils mit der Steuerungseinrichtung verbunden. Insbesondere für autonom fahrende Fahrzeuge ist eine Bestimmung der momentanen Fahrtrichtung vorteilhaft durch den ersten und/oder den zweiten Lenkwinkelsensor möglich.

Gemäß einer bevorzugten Ausführung umfasst das elektrische Antriebssystem eine erste Bremseinrichtung und eine zweite Bremseinrichtung, wobei die erste Bremseinrichtung mit dem ersten Antriebsrad und die zweite Bremseinrichtung mit dem zweiten Antriebsrad verbunden ist, und wobei die Steuerungseinrichtung mit der ersten Bremseinrichtung und mit der zweiten Bremseinrichtung verbunden ist.

Gemäß einer bevorzugten Ausführung umfasst das elektrische Antriebssystem eine ABS-Regelung für das erste Antriebsrad und für das zweite Antriebsrad.

Die ABS-Regelung gewährleistet vorteilhaft, dass jedes der beiden Antriebsräder, während der Fortbewegung des Fahrzeugs, stets eine Rotation aufweist, so dass vorteilhaft stets ein Lenken oder weiteres Beschleunigen oder Abbremsen des jeweiligen Antriebsrads möglich bleibt. Durch die erste und die zweite Bremseinrichtung ist vorteilhaft auch ein einseitiges, zumindest teilweises, Abbremsen nur eines Antriebsrades möglich. Auf diese Weise kann vorteilhaft eine Lenkwirkung auf das Fahrzeug dadurch erzielt werden, dass eines der Antriebsräder durch Abbremsen langsamer rotiert als das andere. Somit ergibt sich ein Unterschied im Drehmoment der Antriebsräder, wodurch die Kraftwirkungen auf das mechanische Lenksystem von dem ersten und dem zweiten Antriebsrad unterschiedlich groß werden. Für den Fall, dass die elektrische Lenkvorrichtung diese Kräfte nicht ausgleicht, etwa bei einer Fehlfunktion der elektrischen Lenkvorrichtung, kann somit durch eine einseitiges (unterschiedliches) Abbremsen der beiden Antriebsräder eine Lenkwirkung erzielt werden (Bewegung der Domlager, Lenkstangen). Hierbei bewegt die größere Kraftkomponente der beiden Räder das mit beiden Antriebsrädern verbundene mechanische Lenksystem um einen entsprechenden Lenkwinkel.

Gemäß einer Eingabe eines Sensors oder eines Benutzers (durch die Eingabevorrichtung) kann diese Lenk-Bremswirkung vorteilhaft als redundante Hilfslenkung funktionieren oder den Lenkeingriff für eine funktionierende elektrische Lenkvorrichtung unterstützen, wobei letzteres insbesondere bei schweren Fahrzeugen mit hoher Achslast auf der Lenkachse (etwa Vorderachslast) und für große und breite Reifen vorteilhaft ist. Die Steuerungseinrichtung kann vorteilhaft durch Daten von den Lenkwinkelsensoren den Istlenkwinkel (erster und/oder zweiter Lenkwinkel), durch entsprechendes Ansteuern der ersten und/oder zweiten Bremseinrichtung, an einen gewünschten oder vorbestimmten (aus der Eingabe) Solllenkwinkel zumindest annähernd anpassen. Durch die ABS-Regelung wird vorteilhaft verhindert, dass über ein blockierendes Antriebsrad keine Lenkwirkung mehr genutzt werden kann. Neben der ABS-Regelung kann das elektrische Antriebssystem vorteilhaft noch eine ESP-Bremsaktorik umfassen.

Das elektrische Antriebssystem kann vorteilhaft in einem Fahrzeug verbaut sein.

Erfindungsgemäß wird bei einem Verfahren zum Betreiben eines elektrischen Antriebssystems in einem Verfahrensschritt S1 ein erfindungsgemäßes elektrisches Antriebssystems bereitgestellt. In einem weiteren Verfahrensschritt S2 erfolgt ein Ansteuern der ersten elektrischen Maschine mit dem ersten Energiefluss und/oder der zweiten elektrischen Maschine mit dem zweiten Energiefluss mittels der Steuerungseinrichtung gemäß einer Eingabe durch einen Sensor und/oder einen Benutzer. In einem weiteren Verfahrensschritt S3 erfolgt ein Betreiben des mechanischen Lenksystems mittels der dritten elektrischen Maschine, wobei die dritte elektrische Maschine von der Steuerungseinrichtung gesteuert wird.

Gemäß einer bevorzugten Ausführungsform des Verfahrens erfolgt im Verfahrensschritt S3 im Falle einer Fehlfunktion der elektrischen Lenkvorrichtung oder unterstützend zum Betreiben des mechanischen Lenksystems ein Lenken mittels einem Antreiben oder einem Abbremsen des ersten Antriebsrads und/oder des zweiten Antriebsrads.

Bei der Steuerungseinrichtung kann es sich vorteilhaft um eine Rechner- oder Regeleinrichtung handeln, welche den Traktionsantrieb und die Lenkbewegungen an einem Fahrzeug, vorteilhaft an einem autonom fahrenden Fahrzeug, steuert. Die Steuerungseinrichtung kann das Fahrzeug hierbei vollständig selbst (autonom) steuern (Lenken, Bremsen, Beschleunigen) oder Eingaben eines Benutzers (Fahrers) umsetzen. Hierbei steuert die Steuerungseinrichtung entsprechend einen Inverter im ersten und/oder zweiten Traktionsantrieb an, welcher den ersten Energiefluss an die erste elektrische Maschine weitergibt und/oder den zweiten Energiefluss an die zweite elektrische Maschine weitergibt. Die Eingabe vom Sensor kann ebenfalls an die Steuerungseinrichtung weitergegeben werden, welche diese Eingabe dann gegenüber der Lenkung und dem Traktionsantrieb umsetzt.

Der Betrieb eines Fahrzeugs mit einem genannten elektrischen Antriebssystem kann vorteilhaft mit beiden Traktionsantrieben erfolgen und das Fahrzeug über das elektrische Lenksystem gesteuert werden. Bei einer Fehlfunktion im elektrischen Lenksystem kann das Fahrzeug über die beiden Traktionsantriebe angetrieben werden und auch über diese, und vorteilhaft unterstützt durch die Bremseinrichtungen, gelenkt werden. Bei einer Fehlfunktion eines der Traktionsantriebe, kann das Fahrzeug über die elektrische Lenkvorrichtung gelenkt werden und über den verbleibenden funktionierenden Traktionsantrieb angetrieben werden, und etwa auch über die Bremseinrichtungen und teilweise über die Traktionsantriebe (falls noch soviel Drehmoment aufgebracht werden kann) unterstützend gelenkt werden. Dadurch kann ohne zusätzliche Redundanz in der Lenkung in allen relevanten Situationen der Antrieb und die Lenkung sichergestellt werden.

Im Falle einer Fehlfunktion eines der Traktionsantriebe kann die Steuerungseinrichtung vorteilhaft den anderen, noch funktionierenden Traktionsantrieb, steuern und somit den Wegfall oder die Einschränkung vom fehlerhaften Traktionsantrieb entsprechend ausgleichen. So ist es vorteilhaft möglich eine Fortbewegung des Fahrzeugs, trotz Fehler in einem der Traktionsantriebe, weiterhin zu gewährleisten und auch bei schnellen Fahrmanövern oder in Gefahrensituationen, etwa an Kreuzungen, Bahnübergängen, Überholvorgängen, Auffahrten auf die Autobahn oder Ähnlichem, einen ausreichenden Antrieb zur Verfügung zu haben.

Durch die vorteilhaft individuelle Steuerung der beiden Antriebsräder durch die Steuerungseinrichtung kann vorteilhaft beim Antrieb auf ein Differential verzichtet werden.

Eine Redundanz in der Lenkung ergibt sich vorteilhaft durch die Möglichkeit neben der eigentlichen elektrischen Lenkung mit der dritten elektrischen Maschine, oder bei einer Fehlfunktion anstatt dieser, eine Lenkung des Fahrzeugs über ein Abbremsen oder Beschleunigen (oder beides) der einzelnen Antriebsräder zu erzielen.

Gemäß einer bevorzugten Ausführungsform des Verfahrens wird der erste Lenkwinkelsensor von der Steuerungseinrichtung und/oder von dem ersten Bordnetz und von dem dritten Bordnetz ausgelesen und der zweite Lenkwinkelsensor von der Steuerungseinrichtung und/oder von dem zweiten Bordnetz und von dem dritten Bordnetz ausgelesen. Die Steuerungseinrichtung vergleicht den ersten Lenkwinkel und den zweiten Lenkwinkel mit einem vorgegebenen Lenkwinkel und zum Anpassen des ersten Lenkwinkels und/oder des zweiten Lenkwinkels an den vorgegebenen Lenkwinkel betreibt die Steuerungseinrichtung die erste elektrische Maschine und die zweite elektrische Maschine mit unterschiedlichen Drehmomenten oder unterschiedlichen Drehzahlen.

Die Steuerungseinrichtung kann zum Auslesen der Lenkwinkelsensoren jeweils ein erstes Modul zum Auslesen des ersten Lenkwinkelsensors und ein zweites Modul zum Auslesen des zweiten Lenkwinkelsensors umfassen, wobei die Module getrennt voneinander und von zwei Energiequellen der Steuerungseinrichtung versorgt und betrieben werden können oder wobei das erste Modul von dem ersten Bordnetz gesteuert und/oder mit Energie versorgt wird und das zweite Modul von dem zweiten Bordnetz gesteuert und/oder mit Energie versorgt wird. Durch die getrennte Versorgung mit zwei Energiequellen oder durch die Bordnetze können die beiden Module vorteilhaft stets den ersten und den zweiten Lenkwinkelsensor auslesen, auch wenn eines der Bordnetze gerade eine Fehlfunktion aufweist, und dann kann die Steuerungseinrichtung die Traktionsantriebe (und/oder die Bremsen) und/oder die Lenkvorrichtung ansteuern.

Zum Auslesen kann jedes Bordnetz selbst auch eine elektronische Vorrichtung zum Auslesen des jeweiligen Lenkwinkelsensors umfassen und den Lenkwinkel an die Steuerungseinrichtung weiterleiten, wobei die elektronische Vorrichtung zum Auslesen vom jeweiligen Bordnetz, und unabhängig von den anderen Bordnetzen, mit Energie versorgt wird.

Durch die doppelte Auslesung sowohl des ersten wie auch des zweiten Lenkwinkelsensors kann vorteilhaft auch bei einem Fehler in einem der Bordnetze weiterhin die Information über die von den Antriebsrädern eingeschlagenen Lenkwinkel (Istlenkwinkel) erkannt und verarbeitet werden, vorteilhaft durch die Steuerungseinrichtung. Hierbei kann vorteilhaft vermieden werden, dass ein Ausfall einer Einzelkomponente zum Erliegen des gesamten Systems (Lenkung, Antrieb, Bremsen) führen kann (Common-Cause-Fehler). Der von dem jeweiligen Antriebsrad momentan eingeschlagene erste oder zweite Lenkwinkel (Istlenkwinkel) kann, etwa durch eine Auffahrt auf ein Hindernis, von dem durch die Eingabe oder der vorbestimmten Fahrtrichtung vorgegebenen Lenkwinkel (Solllenkwinkel) verschieden sein. Zum Ausgleich einer solchen Abweichung der Lenkwinkel kann vorteilhaft zusätzlich oder anstatt dem einseitigen Abbremsen der einzelnen Antriebsräder ein Beschleunigen der einzelnen Antriebsräder erfolgen. Falls nach links eingeschlagen werden soll, muss vorteilhaft das linke Antriebsrad etwas stärker abgebremst werden als das rechte Antriebsrad und umgekehrt. Durch das doppelte Auslesen erhalten sowohl das Bordnetz für die elektrische Lenkvorrichtung wie auch die Bordnetze für die Lenkung über die Traktionsantriebe eine Information über die momentane Lenkrichtung. Im Normalbetrieb kann die Lenkung also über die Traktionsantriebe und/oder über die elektrische Lenkvorrichtung vollzogen werden. Im Falle einer Fehlfunktion in einem der Systeme, kann jedoch das jeweils andere System vorteilhaft den notwendigen Lenkvorgang erkennen und durchführen. Die Steuerungseinrichtung kann vorteilhaft auch die erste und die zweite Bremseinrichtung in Abhängigkeit vom momentanen Lenkwinkel an den einzelnen Antriebsrädern ansteuern und eine entsprechende Lenk-Bremswirkung bewirken.

Gemäß einer bevorzugten Ausführungsform des Verfahrens wird durch die Steuerungseinrichtung das erste Antriebsrad mittels der ersten Bremseinrichtung abgebremst und/oder das zweite Antriebsrad mittels der zweiten Bremseinrichtung abgebremst, so dass ein Differenzdrehmoment zwischen dem ersten Antriebsrad und dem zweiten Antriebsrad erzeugt wird.

Das Ausmaß der Bremswirkung ist hierbei von der Steuerungseinrichtung in einer solchen Größenordnung anzusetzen, dass die auftretende Differenz in der Rotationsgeschwindigkeit des abgebremsten Antriebsrads zum anderen Antriebsrad ein solches Differenzdrehmoment erzeugt, dass vorteilhaft genau oder zumindest annähernd die benötigte Änderung im Lenkwinkel des abgebremsten Antriebsrads erzeugt werden kann. Dies erfolgt vorteilhaft entsprechend bei einzeln aufgehängten Antriebsrädern oder entsprechend bei Antriebsrädern, deren Lenkbewegung durch ein mechanisches Lenksystem aneinander gekoppelt ist (Differenzwirkung der Kräfte auf das Lenksystem). Bei einzeln aufgehängten Antriebsrädern wirkt eine elektrische Lenkvorrichtung getrennt auf die Antriebsräder.

Gemäß einer bevorzugten Ausführungsform des Verfahrens bestimmt die Steuerungseinrichtung eine Drehmomentreserve für die erste elektrische Maschine und/oder für die zweite elektrische Maschine, welche für das Lenken mit dem Antrieb am ersten Antriebsrad und/oder am zweiten Antriebsrad benötigt wird, und im Verfahrensschritt S2 betreibt die Steuerungseinrichtung die erste elektrische Maschine und die zweite elektrische Maschine nur mit einem solchen Drehmoment, dass das mögliche Restdrehmoment stets zumindest gleich der Drehmomentreserve ist.

Wenn eine Lenkwirkung durch das Beschleunigen eines Antriebsrads oder der Antriebsräder erzielt werden soll, so kann jeweils die erste elektrische Maschine und/oder die zweite elektrische Maschine derart geregelt (angesteuert) werden, dass entweder eine Regelung des Drehmoments oder der Drehzahl der jeweiligen elektrischen Maschine erfolgt, welche eine Lenk-Bewegung verursachen soll. Dies erfolgt vorteilhaft jeweils in Abhängigkeit der gemessenen ersten und/oder zweiten Lenkwinkel gegenüber dem vorgegebenen Lenkwinkel. Die Steuerungseinrichtungen ermitteln für jedes einzelne Antriebsrad zum Anpassen der Lenkwinkel ein nötiges Differenzdrehmoment oder eine Differenzdrehzahl (jeweils vorteilhaft in Abhängigkeit von einer Abweichung vom vorgegebenen Lenkwinkel) der jeweiligen elektrischen Maschine, um durch Beschleunigung oder Abbremsen eine benötigte Lenkwirkung zu erzielen. Diese wird dann vorteilhaft dem jeweiligen momentanen Traktionsantrieb (der Drehzahl oder dem Drehmoment der Maschine) aufgeschlagen oder abgezogen. Des Weiteren ist es auch denkbar die für die Regelung des Differenzdrehmoments eine Kaskadenregelung mit untergelagerter Drehmomentregelung anzuwenden.

Auf diese Weise ergibt sich vorteilhaft auch die Wirkung einer automatischen Differentialsperre für den Gesamtantrieb eines Fahrzeugs.

Für eine bereits bestehende Fahrtbewegung weist die Funktionalität der Lenkung vorteilhaft eine höhere Priorität auf als die Funktionalität des eigentlichen Traktionsantriebs (Normalantrieb ohne Lenkanforderung), da auch bei einem Ausfall des Traktionsantriebs (eines der beiden Traktionsantriebe) und bei einem rollenden Fahrzeug dieses trotzdem gelenkt werden muss. Um stets einen Lenkeingriff gewährleisten zu können, muss vorteilhaft gerade im Falle eines Ausfalls der elektrischen Lenkvorrichtung, jeder der beiden Traktionsantriebe eine Antriebsreserve aufweisen, die auch bei maximalen Normalantrieb noch zur Verfügung steht und ein Not- oder Hilfslenkmanöver ermöglicht. Mit anderen Worten, muss jede der ersten und der zweiten elektrischen Maschine ein Restdrehmoment aufbringen können, welches zumindest der zum Lenkeingriff nötigen Drehmomentreserve entspricht. Diese Drehmomentreserve kann vorteilhaft als Wert bezüglich der Radgröße und Gesamtleistung der elektrischen Maschine sowie ihrer Regelkreise und weiterer Parameter vorgegeben (gespeichert in der Steuerungseinrichtung) sein und von der Steuerungseinrichtung bei der Regelung des Normalbetriebs der jeweiligen elektrischen Maschine angewandt werden. Der Normalbetrieb, welcher einem Betrieb der ersten und der zweiten elektrischen Maschine ohne Lenkeingriff durch Traktion entspricht, weist ein solches limitiertes Maximaldrehmoment auf, dass das mögliche restliche zu erzielende Gesamtdrehmoment der jeweiligen Maschine noch zumindest die Drehmomentreserve für die Lenkung beträgt. Falls das limitierte Maximaldrehmoment für die erste und die zweite elektrische Maschine unterschiedlich ist, wird das kleinere der beiden Maximaldrehmomente als gemeinsames limitiertes Maximaldrehmoment durch die Bordnetze oder durch die Steuerungseinrichtung für beide elektrische Maschinen (erste und zweite) festgesetzt. Die Limitierung erfolgt vorteilhaft durch einen Begrenzer (etwa eine Softwareroutine) und ist vorteilhaft anzuwenden, wenn die Drehmomentreserven der Maschinen nicht gleichzeitig zum Lenken und zum Fahren ausreichen.

Hierdurch wird vorteilhaft verhindert, dass bei einem Traktionsantrieb mit beiden Maschinen mit dem Maximaldrehmoment ein Unterschied im Drehmoment und somit ein Lenkeinschlag entsteht, beispielsweise durch thermisches Derating.

Ein derartiges elektrisches Antriebssystem weist den Vorteil auf, dass gleichzeitig eine Redundanz für Antrieb und Lenkung gegeben ist, und dass dabei auf eine redundante Lenkung an sich verzichtet werden kann. Weiterhin kann ein solches Antriebssystem vorteilhaft einfach in beliebige Fahrzeuge integriert werden (etwa für Niederflurkonzepte)

Erfindungsgemäß ist eine Steuerungseinrichtung zum Ansteuern einer ersten elektrischen Maschine für ein erstes Antriebsrad und/oder einer zweiten elektrischen Maschine für ein zweites Antriebsrad und/oder einer dritten elektrischen Maschine für ein mechanisches Lenksystem in einem elektrischen Antriebssystem eingerichtet, wobei die erste elektrische Maschine mit einem ersten Energiefluss von einer ersten Energiespeichereinrichtung und die zweite elektrische Maschine mit einem zweiten Energiefluss von einer zweiten Energiespeichereinrichtung gemäß einer Eingabe durch eine Eingabevorrichtung ansteuerbar ist, und wobei die Steuerungseinrichtung mit der ersten elektrischen Maschine und/oder mit der zweiten elektrischen Maschine und/oder mit der dritten elektrischen Maschine verbunden ist.

Gemäß einer bevorzugten Ausführungsform der Steuerungseinrichtung ist diese mit einer ersten Bremseinrichtung und mit einer zweiten Bremseinrichtung verbunden, und dazu eingerichtet, das erste Antriebsrad mittels der ersten Bremseinrichtung und/oder das zweite Antriebsrad mittels der zweiten Bremseinrichtung abzubremsen, so dass ein Differenzdrehmoment zwischen dem ersten Antriebsrad und dem zweiten Antriebsrad erzeugbar ist.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand dem in den schematischen Figuren der Zeichnungen angegebenen Ausführungsbeispiel näher erläutert. Es zeigen:
Fig. 1 eine schematische Darstellung eines elektrischen Antriebssystems gemäß einer Ausführungsform der vorliegenden Erfindung;
Fig. 2 eine schematische Darstellung der Drehmomentreserve;
Fig. 3 eine schematische Darstellung der Relationen der Lenkwinkel; und
Fig. 4 eine schematische Darstellung der Verfahrensschritte gemäß einer Ausführung der vorliegenden Erfindung.

In den Figuren bezeichnen gleiche Bezugszeichen gleiche bzw. funktionsgleiche Elemente.

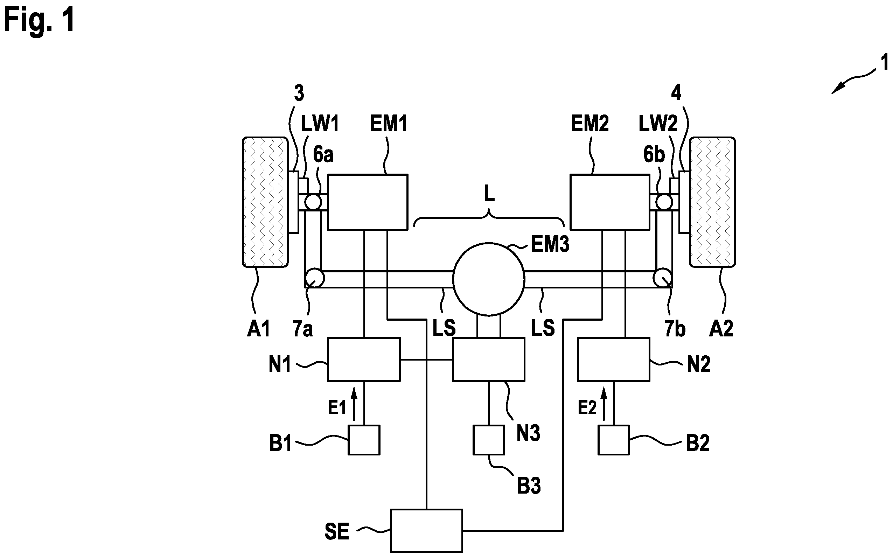

Fig. 1 zeigt eine schematische Darstellung eines elektrischen Antriebssystems gemäß einer Ausführungsform der vorliegenden Erfindung.

Ein erstes Antriebsrad A1 und ein zweites Antriebsrad A2 sind über ein mechanisches Lenksystem LS mit einer elektrischen Lenkvorrichtung L verbunden, wobei die elektrische Lenkvorrichtung L eine dritte elektrische Maschine EM3 zum Betrieb des mechanischen Lenksystems LS umfasst. Das mechanische Lenksystem LS umfasst dabei vorteilhaft ein Domlager, Lenk- und Spurstangen 7a und 7b, sowie Federbeine 6a und 6b oder weitere Komponenten wie Lenkkraftverstärker oder Ähnliches. Für eine Lenkanwendung kann vorteilhaft ein Störkrafthebelarm (Dimension der mechanischen Lenkkomponenten) entsprechend den Anforderungen geeignet und insbesondere größer als bei gängigen Auslegungen dimensioniert werden.

Das erste Antriebsrad A1 ist weiterhin mit einer ersten elektrischen Maschine EM1, über welche ein erster Traktionsantrieb am ersten Antriebsrad A1 angelegt ist, und mit einer ersten Bremseinrichtung 3 verbunden, welche vorteilhaft am Antriebsrad A1 selbst oder an einer Drehkomponenten für das erste Antriebsrad A1 angebracht ist. Das zweite Antriebsrad A2 ist weiterhin mit einer zweiten elektrischen Maschine EM2, über welche ein zweiter Traktionsantrieb am zweiten Antriebsrad A2 angelegt ist, und mit einer zweiten Bremseinrichtung 4 verbunden, welche vorteilhaft am zweiten Antriebsrad A2 selbst oder an einer Drehkomponenten für das zweite Antriebsrad A1 angebracht ist. Des Weiteren ist am ersten Antriebsrad A1 am mechanischen Lenksystem LS oder an einer Radaufhängung ein erster Lenkwinkelsensor LW1 und am zweiten Antriebsrad A2 am mechanischen Lenksystem LS oder an einer Radaufhängung ein zweiter Lenkwinkelsensor LW2 angeordnet. Die erste elektrische Maschine EM1 wird mit einem ersten Energiefluss E1 von einer ersten Energiespeichereinrichtung B1 betrieben, und ist mit einem ersten Bordnetz N1 verschaltet. Hierbei wird vorteilhaft die erste elektrische Maschine EM1 über einen Inverter (nicht gezeigt) angesteuert. Die zweite elektrische Maschine EM2 wird mit einem zweiten Energiefluss E2 von einer zweiten Energiespeichereinrichtung B2 betrieben, und ist mit einem zweiten Bordnetz N2 verschaltet. Hierbei wird vorteilhaft die zweite elektrische Maschine EM2 über einen Inverter (nicht gezeigt) angesteuert. Das erste und das zweite Bordnetz N1 und N2 sind somit vorteilhaft getrennt voneinander ausgeformt, wodurch vorteilhaft verhindert werden kann, dass der Ausfall eines Bordnetzes zum Ausfall der Lenkung oder des Gesamtantriebs führt. Die dritte elektrische Maschine EM3 wird vorteilhaft mit einer dritten Energiespeichereinrichtung B3 betrieben und ist vorteilhaft mit einem dritten Bordnetz N3 verbunden. Die erste, die zweite und die dritte Energiespeichereinrichtung B1, B2 und B3 können vorteilhaft auch miteinander redundant verschaltet sein (nicht gezeigt). Die Bordnetze N1, N2 und N3 werden vorteilhaft jeweils über die erste, die zweite und die dritte Energiespeichereinrichtung B1, B2 und B3 versorgt, oder umfassen zur Redundanz in Energie auch eigene Stützbatterien auf 12 V-Basis, wodurch vorteilhaft verhindert werden kann, dass der Ausfall einer der Energiespeichereinrichtungen oder Stützbatterien zum Ausfall im Antrieb, Lenkung oder der Bordnetze führen könnte.

Eine Steuerungseinrichtung SE ist zum Steuern der ersten elektrischen Maschine EM1 mit dieser verbunden und zum Steuern der zweiten elektrischen Maschine EM2 mit dieser (vorteilhaft jeweils über einen Inverter oder über das jeweilige Bordnetz) verbunden. Die Steuerungseinrichtung SE ist weiterhin mit der ersten Bremseinrichtung 3 und mit der zweiten Bremseinrichtung 4 (nicht gezeigt) verbunden, um einen Lenk-Bremseingriff koordinieren zu können. Die Steuerungseinrichtung SE kann weiterhin auch mit dem ersten Lenkwinkelsensor LW1 und mit dem zweiten Lenkwinkelsensor LW2 verbunden sein. Die Steuerungseinrichtung SE ist weiterhin mit der elektrischen Lenkvorrichtung L, vorteilhaft mit dem dritten Bordnetz N3 und mit der dritten elektrischen Maschine EM3 verbunden. Auch die Bordnetze N1 und N2 können vorteilhaft mit dem ersten Lenkwinkelsensor LW1 und mit dem zweiten Lenkwinkelsensor LW2 (nicht gezeigt) verbunden sein. Das elektrische Antriebssystem 1 kann vorteilhaft gemäß einer Eingabe durch eine Eingabevorrichtung (nicht gezeigt) gesteuert werden.

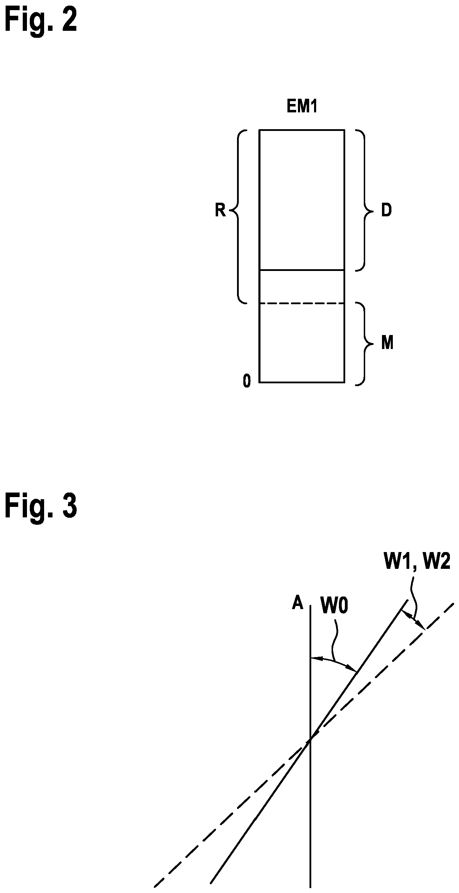

Fig. 2 zeigt eine schematische Darstellung der Drehmomentreserve.

Gemäß dem erfindungsgemäßen Verfahren werden für die erste sowie für die zweite elektrische Maschine jeweils Drehmomentreserven D bereit gehalten, welche für eine Not- oder Hilfslenkwirkung stets zur Verfügung stehen. Für jede der beiden elektrischen Maschinen aus dem Traktionsantrieb wird ein Maximaldrehmoment M bestimmt, mit welchem der Normalantrieb (ohne Lenkwirkung durch Beschleunigung des Antriebsrads) betrieben wird. Das für die jeweilige elektrische Maschine zur Verfügung stehende Restdrehmoment R, welches die elektrische Maschine noch zusätzlich zum Maximaldrehmoment M leisten kann, muss zumindest gleich groß sein, vorteilhaft größer, als die Drehmomentreserve D, damit eine Lenkwirkung mit dem Drehmoment D stets noch aufgebracht werden kann.

Fig. 3 zeigt eine schematische Darstellung einer Relation der Lenkwinkel.

Die beiden Antriebsräder können jeweils von einem vorgegebenen Lenkwinkel W0 um einen ersten Lenkwinkel W1 (erstes Antriebsrad) oder um einen zweiten Lenkwinkel W2 (zweites Antriebsrad) abweichen. Bei einem mechanischen Lenksystem, bei welchem beide Antriebsräder miteinander gekoppelt sind, sind diese beiden Lenkwinkel W1 und W2 vorteilhaft stets gleich. Die Lenkwinkel werden vorteilhaft gegenüber einer Grundrichtung A definiert, welche einer vordefinierten Richtung, beispielsweise der Fahrzeugachse, entspricht.

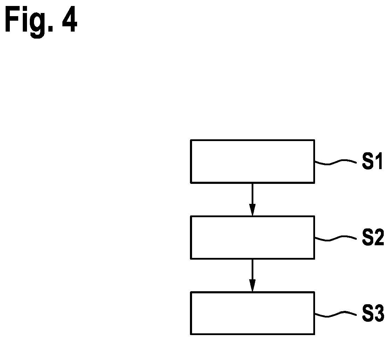

Fig. 4 zeigt eine schematische Darstellung der Verfahrensschritte gemäß einer Ausführung der vorliegenden Erfindung.

Nach dem Verfahrensschritt S1 erfolgen zusätzlich noch die Verfahrensschritte S2 und S3.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar.

## Patentansprüche

1. Elektrisches Antriebssystem (1), umfassend
- eine erste elektrische Maschine (EM1), welche mit einem ersten Antriebsrad (A1) verbunden ist,
- eine zweite elektrische Maschine (EM2), welche mit einem zweiten Antriebsrad (A2) verbunden ist,
- eine elektrische Lenkvorrichtung (L), welche mit dem ersten Antriebsrad (A1) und mit dem zweiten Antriebsrad (A2) verbunden ist, und
- eine Steuerungseinrichtung (SE), welche mit der ersten elektrischen Maschine (EM1) und mit der zweiten elektrischen Maschine (EM2) verbunden ist, und welche dazu eingerichtet ist, in Abhängigkeit von einer Eingabe durch eine Eingabevorrichtung, die erste elektrische Maschine (EM1) mit einem ersten Energiefluss (E1) und/oder die zweite elektrische Maschine (EM2) mit einem zweiten Energiefluss (E2) anzusteuern.

2. Elektrisches Antriebssystem (1) nach Anspruch 1, bei dem die elektrische Lenkvorrichtung (L) ein mechanisches Lenksystem (LS) und eine dritte elektrische Maschine (EM3) umfasst, wobei das mechanische Lenksystem (LS) mit dem ersten Antriebsrad (A1) und mit dem zweiten Antriebsrad (A2) verbunden ist, und die dritte elektrische Maschine (EM3) dazu eingerichtet ist, das mechanische Lenksystem (LS) zu betreiben.

3. Elektrisches Antriebssystem (1) nach Anspruch 1 oder 2, welches eine erste Energiespeichereinrichtung (B1) und einer zweite Energiespeichereinrichtung (B2) umfasst, wobei die erste Energiespeichereinrichtung (B1) den ersten Energiefluss (E1) und die zweite Energiespeichereinrichtung (B2) den zweiten Energiefluss (E2) bereitstellt.

4. Elektrisches Antriebssystem (1) nach einem der Ansprüche 1 bis 3, welches ein erstes Bordnetz (N1) und ein zweites Bordnetz (N2) umfasst, wobei das erste Bordnetz (N1) mit der ersten elektrischen Maschine (EM1) und das zweite Bordnetz (N2) mit der zweiten elektrischen Maschine (EM2) verbunden ist, und die Steuerungseinrichtung (SE) mit dem ersten Bordnetz (N1) und mit dem zweiten Bordnetz (N2) verbunden ist.

5. Elektrisches Antriebssystem (1) nach einem der Ansprüche 1 bis 4, welches ein drittes Bordnetz (N3) umfasst, welches mit der elektrischen Lenkvorrichtung (L) verbunden ist, und die Steuerungseinrichtung (SE) mit dem dritten Bordnetz (N3) verbunden ist.

6. Elektrisches Antriebssystem (1) nach einem der Ansprüche 1 bis 5, bei dem das mechanische Lenksystem (LS) einen ersten Lenkwinkelsensor (LW1) und einen zweiten Lenkwinkelsensor (LW2) umfasst, wobei der erste Lenkwinkelsensor (LW1) dazu eingerichtet ist, einen ersten Lenkwinkel (W1) des ersten Antriebsrads (A1) zu bestimmen, und der zweite Lenkwinkelsensor (LW2) dazu eingerichtet ist, einen zweiten Lenkwinkel (W2) des zweiten Antriebsrads (A2) zu bestimmen.

7. Elektrisches Antriebssystem (1) nach einem der Ansprüche 1 bis 6, welches eine erste Bremseinrichtung (3) und eine zweite Bremseinrichtung (4) umfasst, wobei die erste Bremseinrichtung (3) mit dem ersten Antriebsrad (A1) und die zweite Bremseinrichtung (4) mit dem zweiten Antriebsrad (A2) verbunden ist, und wobei die Steuerungseinrichtung (SE) mit der ersten Bremseinrichtung (3) und mit der zweiten Bremseinrichtung (4) verbunden ist.

8. Elektrisches Antriebssystem (1) nach einem der Ansprüche 1 bis 7, welches eine ABS-Regelung für das erste Antriebsrad (A1) und für das zweite Antriebsrad (A2) umfasst.

9. Verfahren zum Betreiben eines elektrischen Antriebssystems (1) umfassend die Schritte:
- S1) Bereitstellen eines elektrischen Antriebssystems (1) nach einem der Ansprüche 1 bis 8;
- S2) Ansteuern der ersten elektrischen Maschine (EM1) mit dem ersten Energiefluss (E1) und/oder der zweiten elektrischen Maschine (EM2) mit dem zweiten Energiefluss (E2) mittels der Steuerungseinrichtung (SE) gemäß einer Eingabe durch eine Eingabevorrichtung; und
- S3) Betreiben des mechanischen Lenksystems (LS) mittels der dritten elektrischen Maschine (EM3), wobei die dritte elektrische Maschine (EM3) von der Steuerungseinrichtung (SE) gesteuert wird.

10. Verfahren zum Betreiben eines elektrischen Antriebssystems (1) nach Anspruch 9, bei dem im Verfahrensschritt S3 im Falle einer Fehlfunktion der elektrischen Lenkvorrichtung (L) oder unterstützend zum Betreiben des mechanischen Lenksystems (LS) ein Lenken mittels einem Antreiben oder einem Abbremsen des ersten Antriebsrads (A1) und/oder des zweiten Antriebsrads (A2) erfolgt.

11. Verfahren nach Anspruch 9 oder 10, bei dem der erste Lenkwinkelsensor (LW1) von der Steuerungseinrichtung (SE) und/oder vom ersten Bordnetz (N1) und vom dritten Bordnetz (N3) und der zweite Lenkwinkelsensor (LW2) von der Steuerungseinrichtung (SE) und/oder vom zweiten Bordnetz (N2) und vom dritten Bordnetz (N3) ausgelesen wird, und die Steuerungseinrichtung (SE) den ersten Lenkwinkel (W1) und den zweiten Lenkwinkel (W2) mit einem vorgegebenen Lenkwinkel (W0) vergleicht und zum Anpassen des ersten Lenkwinkels (W1) und/oder des zweiten Lenkwinkels (W2) an den vorgegebenen Lenkwinkel (W0) die Steuerungseinrichtung (SE) die erste elektrische Maschine (EM1) und die zweite elektrische Maschine (EM2) mit unterschiedlichen Drehmomenten oder unterschiedlichen Drehzahlen betreibt.

12. Verfahren nach Anspruch 10 oder 11, bei dem durch die Steuerungseinrichtung (SE) das erste Antriebsrad (A1) mittels der ersten Bremseinrichtung (3) abgebremst wird und/oder das zweite Antriebsrad (A2) mittels der zweiten Bremseinrichtung (4) abgebremst wird, so dass ein Differenzdrehmoment zwischen dem ersten Antriebsrad (A1) und dem zweiten Antriebsrad (A2) erzeugt wird.

13. Verfahren nach Anspruch 11 oder 12, bei dem die Steuerungseinrichtung (SE) eine Drehmomentreserve (D) für die erste elektrische Maschine (EM1) und/oder für die zweite elektrische Maschine (EM2) bestimmt, welche für das Lenken mit dem Antrieb am ersten Antriebsrad (A1) und/oder am zweiten Antriebsrad (A2) benötigt wird, und im Verfahrensschritt S2 die Steuerungseinrichtung (SE) die erste elektrische Maschine (EM1) und die zweite elektrische Maschine (EM2) nur mit einem solchen Drehmoment (M) betreibt, dass das mögliche Restdrehmoment stets zumindest gleich der Drehmomentreserve (D) ist.

14. Steuerungseinrichtung (SE) zum Ansteuern einer ersten elektrischen Maschine (EM1) für ein erstes Antriebsrad (A1) und/oder einer zweiten elektrischen Maschine (EM2) für ein zweites Antriebsrad (A2) und/oder einer dritten elektrischen Maschine (EM3) für ein mechanisches Lenksystem (LS) in einem elektrischen Antriebssystem (1) nach einem der Ansprüche 1 bis 8, wobei
- die erste elektrische Maschine (EM1) mit einem ersten Energiefluss (E1) von einer ersten Energiespeichereinrichtung (B1) und die zweite elektrische Maschine (EM2) mit einem zweiten Energiefluss (E2) von einer zweiten Energiespeichereinrichtung (B2) gemäß einer Eingabe durch eine Eingabevorrichtung ansteuerbar ist, und
- die Steuerungseinrichtung (SE) mit der ersten elektrischen Maschine (EM1) und/oder mit der zweiten elektrischen Maschine (EM2) und/oder mit der dritten elektrischen Maschine (EM3) verbunden ist.

15. Steuerungseinrichtung (SE) nach Anspruch 14, welche mit einer ersten Bremseinrichtung (3) und mit einer zweiten Bremseinrichtung (4) verbunden ist, und dazu eingerichtet ist, das erste Antriebsrad (A1) mittels der ersten Bremseinrichtung (3) und/oder das zweite Antriebsrad (A2) mittels der zweiten Bremseinrichtung (4) abzubremsen, so dass ein Differenzdrehmoment zwischen dem ersten Antriebsrad (A1) und dem zweiten Antriebsrad (A2) erzeugt wird.
